# EUROPEAN PATENT SPECIFICATION

(11) **EP 1 721 757 B1**
(45) Date of publication and mention of the grant of the patent: **31.03.2010**
(21) Application number: 06113700.6
(22) Date of filing: 09.05.2006
(51) Int. Cl.: B60B 27/00, F16C 35/063

(54) **Bearing apparatus for a wheel of vehicle**
Lageranordnung für Fahrzeugrad
Agencement de palier pour roue de véhicule

(30) Priority: 10.05.2005 JP 2005136848
(43) Date of publication of application: 15.11.2006
(73) Proprietor: NTN Corporation, Osaka-shi, Osaka 550-0003 (JP)
(72) Inventor: Shigeoka, Kazuhisa, Shizuoka-ken (JP)
(74) Representative: Cohausz & Florack

(56) References cited:
- WO-A-2004/101295
- DE-A1- 10 305 084
- US-A- 5 240 333
- US-A1- 2001 046 339
- PATENT ABSTRACTS OF JAPAN vol. 2003, no. 04, 2 April 2003 (2003-04-02) & JP 2002 349585 A (NTN CORP), 4 December 2002 (2002-12-04)

## Description

### BACKGROUND OF THE INVENTION

### Field of the Invention

The present invention relates to a bearing apparatus for a wheel of vehicle for rotatably supporting a wheel of vehicle relative to a suspension system, and more particularly to a bearing apparatus for a wheel of vehicle intended to improve the durability of a hub wheel of the bearing apparatus of third generation type in which an inner ring is press-fitted on a cylindrical portion of the hub wheel.

### Description of Background Art

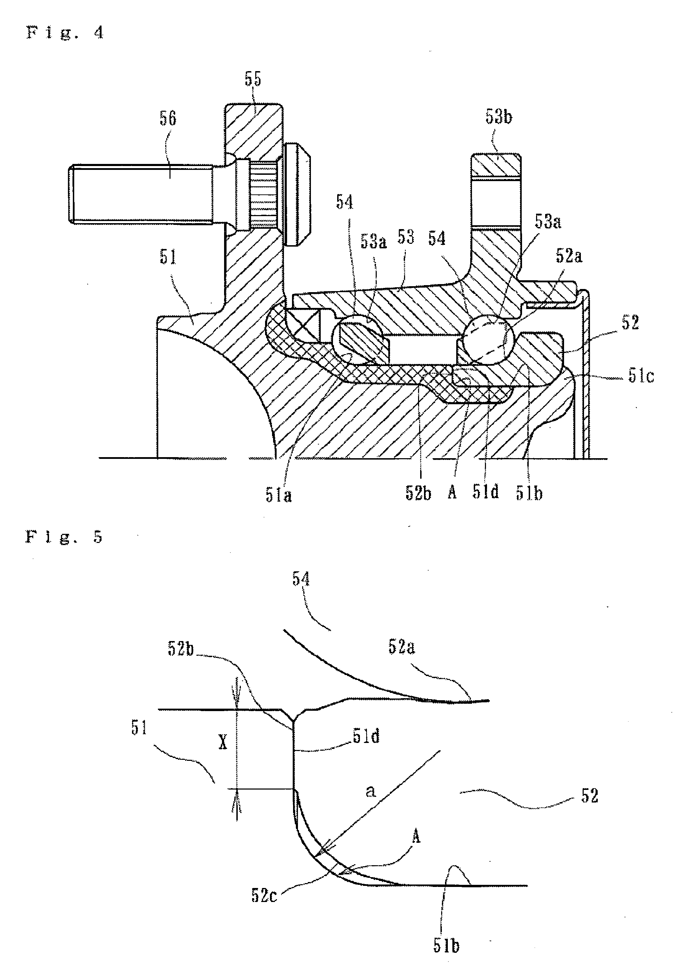

There are two types of bearing apparatus for a wheel of vehicle e.g. such as those for a driving wheel and a driven wheel and improvements in reduction of manufacturing cost and reduction of weight and size for improving fuel consumption have been achieved. One representative example of such a bearing apparatus of the prior art is shown in Fig. 4.

The bearing apparatus of a wheel of vehicle of Fig. 4 is that of the so-called the third generation type and has a hub wheel 51, an inner ring 52, an outer ring 53, and double row rolling elements 54, 54. The hub wheel 51 has a wheel mounting flange 55 for mounting a wheel (not shown) formed integrally therewith at one end thereof, an inner raceway surface 51a formed on the outer circumferential surface, and a cylindrical portion 51b axially extending from the inner raceway surface 51a. Hub bolts 56 for securing the wheel on the flange 55 are equidistantly arranged along the periphery of the flange 55.

The inner ring 52 is press-fitted on the cylindrical portion 51b of the hub wheel 51 and is formed on its outer circumferential surface with an inner raceway surface 52a. The inner ring 51 is prevented from being axially slipped off from the cylindrical portion 51b of the hub wheel 51 by a caulked portion 51c formed by radially outwardly deforming the end of the cylindrical portion 51b of the hub wheel 51.

The outer ring 53 has a body mounting flange 53b integrally formed therewith to be mounted on a suspension system (not shown) and double row outer raceway surfaces 53a, 53a formed on the inner circumferential surface. The double row rolling elements 54 are contained freely rollably between the double row outer raceway surface 53a, 53a the inner raceway surfaces 51a, 52a arranged oppositely to the outer raceway surfaces 53a, 53a.

The hub wheel 51 is formed by carbon steel including carbon of 0.40 - 0.80% by weight and hardened by high frequency induction hardening over a surface region (shown by cross-hatching) from a base of the wheel mounting flange 55 to the cylindrical portion 51b. The caulked portion 51c is remained as a non-hardened portion after forging. On the other hand the inner ring 52 is made of high carbon chrome bearing steel such as SUJ 2 and is hardened to its core by dipping quenching.

Thus it is possible to realize a bearing apparatus for a wheel of vehicle of a low manufacturing cost and having sufficient durability, to prevent generation of cracks in the caulked portion 51c, and to prevent the diameter of the inner ring 52 secured by the caulked portion 51c from being deformed to an extent causing practical problems. In addition it is possible to prevent generation of damages in the inner ring 52 such as cracks during its caulking operation, to keep the pre-load at its proper value, and also to reduce the manufacturing cost by reducing the number of parts and the steps of manufacture (see Japanese Laid-open Patent Publication No. 129703/1999).
Document EP 1 623 846 A1 discloses according to the preamble of claim 1 a tapered roller bearing device for supporting a vehicle wheel. The roller bearing assembly comprises an outer member, an inner member and rows of tapered rollers interposed between tapered rolling faces in the inner member and tapered rolling faces in the outer member. The inner member includes a hub axle with a hub flange at a location adjacent an outboard end of the hub axle. To relieve stress concentration near the flange part on the hub flange side, a collar ring is mounted on a portion of the outer periphery of the hub axle adjacent the hub flange for touching the large diameter end of each of the tapered rollers of the outboard row.
A roller bearing wheel hub unit for vehicles is disclosed in DE 103 05 084 A1. The wheel hub unit comprises a hub with an inner tube-shaped area and two rows of rolling bodies supported between a rigid outer member and a first and a second inner member, both of the inner members being mounted next to each other on a cylindrical surface of the tube-shaped area of the wheel hub. The inner members are fixed between a radial shoulder and an edge which is plastically deformed to hold the inner members. A curvature connects the radial shoulder with the tube-shaped area of the wheel hub smoothly to reduce stress concentration in said area. The area of said curvature shows a recess to establish a flat contact section between inner member and radial shoulder.

### Disclosure of the Invention

### Problems to be solved by the Invention

In such a bearing apparatus for a wheel of vehicle of the prior art, a corner "A" (Fig. 5), that is a region remained a vacant space when the inner ring 52 is press-fitted on the cylindrical portion 51b of the hub wheel 51, is formed by a single radius of curvature a i.e. a circular arc. In the bearing apparatus for a wheel of vehicle, although it is required for its size to be reduced to reduce its weight, it is necessary to increase a length "X" (i.e. a contacting area) of the abutted region between the end face 52b of the inner ring 52 and the shoulder of the cylindrical portion 51b in order to assure the rigidity of the inner ring 52. However, if increasing the length "X", the corner "A" will be excessively reduced and thus an excessively large stress would be caused therein. Accordingly, the mechanical strength of the hub wheel 51 would be extremely reduced especially when a bending moment is repeatedly applied to the bearing apparatus.

There will be caused a problem of interference between the corner "A" and a chamfered portion 52c of the inner ring 52 when the radius of curvature of the single radius is increased in order to reduce the stress caused in the corner "A". The interference between the corner "A" and the chamfered portion 52c of the inner ring 52 would cause misalignment and thus reduce the durability of the inner ring 52. Accordingly, dimensional variation or dispersion should be strictly reduced when machining the corner "A". However the strict reduction of the dimensional variation leads to a higher expense of manufacturing cost and thus its degree is limited. Accordingly it has been a problem to suppress the stress caused in the corner "A" under heavy duty circumstances.

### SUMMARY OF THE INVENTION

It is therefore an object of the present invention to provide a bearing apparatus for a wheel of vehicle of the third generation type in which the stress caused in the corner of the cylindrical portion of the hub wheel near a region to which the inner ring abuts is suppressed and thus the durability of the hub wheel is very increased.

### Means for solving problems

For achieving the above, there is provided, according to the present invention of claim 1, a bearing apparatus for a wheel of vehicle comprising: an outer member having a body mounting flange formed integrally therewith and double row outer raceway surfaces formed on the inner circumferential surface thereof; an inner member including a hub wheel having a wheel mounting flange formed integrally therewith at one end thereof, one inner raceway surface formed on the outer circumferential surface thereof oppositely to one of the double row outer raceway surfaces, and a cylindrical portion axially extending from the inner raceway surface through a shoulder, and including an inner ring fitted on the cylindrical portion with its one end being abutted to the shoulder of the hub wheel and formed on its outer circumferential surface with the other inner raceway surface opposite to the other outer raceway surface of the double row outer raceway surfaces; double row rolling elements contained freely rollably between the inner and outer raceway surfaces respectively of the inner and outer members via a cage and a corner between the shoulder of the hub wheel and the cylindrical portion is defined by a compound curve comprising a plurality of radii of curvatures; **characterized in that** outer diameters of the corner defined by the compound curve are at least as large as the outer diameter of the cylindrical portion.

According to the bearing apparatus for a wheel of vehicle of the third generation type of claim 1, since the corner between the shoulder of the hub wheel and the cylindrical portion is defined by a compound curve comprising a plurality of radii of curvatures, it is possible to provide the bearing apparatus which can increase the rigidity of the inner ring by assuring a sufficient contacting area between the shoulder of the hub wheel and the end of the inner ring within a limited space and to improve the durability of the hub wheel by suppressing stress generated in the corner.

As defined in claim 2, it is preferable that the compound curve comprises two radii of curvatures "b" and "c", one radius of curvature "b" being smaller than a radius of curvature "a" which is a maximum radius of curvature for forming the corner by a single curve, the other radius of curvature "c" being larger than said radius of curvature "a", and there being a relation between them as "b<a<c". This enables to prevent the interference between the corner and the chamfered portion of the inner ring and to reduce the manufacturing cost without suppressing the dimensional variation so far.

As defined in claim 3, it is also preferable that the compound curve forming the corner portion is formed by a simultaneous grinding of the inner raceway surface of the hub wheel and the shoulder after high frequency induction hardening of the corner. This makes it possible to carry out machining of the corner of high accuracy without influence of thermal deformation due to heat treatment and to limit a joint gap (amount of pre-load) within the bearing to a desirable range.

It is preferable as defined in claim 4 that the inner ring is secured in an axial direction relative to the hub wheel by a caulked portion formed by radially outwardly deforming the end of the cylindrical portion of the hub wheel. This makes it possible to provide a self-retaining structure which can keep the proper pre-load of bearing for a long term.

Furthermore it is preferable as defined in claim 5 that the hub wheel is formed by medium carbon steel including carbon of 0.40 - 0.80% by weight, the hub wheel is hardened by high frequency induction hardening over a region from a base of the wheel mounting flange to the cylindrical portion as having its surface hardness of 58 - 64 HRC, and the caulked portion is remained as a non-hardened portion having its surface hardness of 25 HRC or less after forging. This enables to improve the strength of the hub wheel and to the durability of the bearing since the fretting wear at the fitted surface of the inner ring. In addition, it is possible to improve the workability of the caulking portion and to prevent generation of cracks due to plastic deformation of that portion.

### Effect of the Invention

According to the present invention, there is provided a bearing apparatus for a wheel of vehicle comprising: an outer member having a body mounting flange formed integrally therewith and double row outer raceway surfaces formed on the inner circumferential surface thereof; an inner member including a hub wheel having a wheel mounting flange formed integrally therewith at one end thereof, one inner raceway surface formed on the outer circumferential surface thereof oppositely to one of the double row outer raceway surfaces, and a cylindrical portion axially extending from the inner raceway surface through a shoulder, and including an inner ring fitted on the cylindrical portion with its one end being abutted to the shoulder of the hub wheel and formed on its outer circumferential surface with the other inner raceway surface opposite to the other outer raceway surface of the double row outer raceway surfaces; and double row rolling elements contained freely rollably between the inner and outer raceway surfaces respectively of the inner and outer members via a cage characterized in that; a corner between the shoulder of the hub wheel and the cylindrical portion is defined by a compound curve comprising a plurality of radii of curvatures.

### Best mode for carrying out the Invention

The best mode for carrying out the present invention is a bearing apparatus for a wheel of vehicle comprising: an outer member having a body mounting flange formed integrally therewith and double row outer raceway surfaces formed on the inner circumferential surface thereof; an inner member including a hub wheel having a wheel mounting flange formed integrally therewith at one end thereof, one inner raceway surface formed on the outer circumferential surface thereof oppositely to one of the double row outer raceway surfaces, and a cylindrical portion axially extending from the inner raceway surface through a shoulder, and including an inner ring fitted on the cylindrical portion with its one end being abutted to the shoulder of the hub wheel and formed on its outer circumferential surface with the other inner raceway surface opposite to the other outer raceway surface of the double row outer raceway surfaces; and double row rolling elements contained freely rollably between the inner and outer raceway surfaces respectively of the inner and outer members via a cage **characterized in that**; a corner between the shoulder of the hub wheel and the cylindrical portion is defined by a compound curve comprising a plurality of radii of curvatures.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a wheel of the present invention;
- Fig. 2: is an enlarged partial view of Fig. 1;
- Fig. 3: is a longitudinal section view showing a second embodiment of the bearing apparatus for a wheel of the present invention;
- Fig. 4: is a longitudinal section view of the bearing apparatus for a wheel of the prior art; and
- Fig. 5: is an enlarged partial view of Fig. 1.

### DESCRIPTION OF THE PREFERRED EMBODIMENTS

### First embodiment

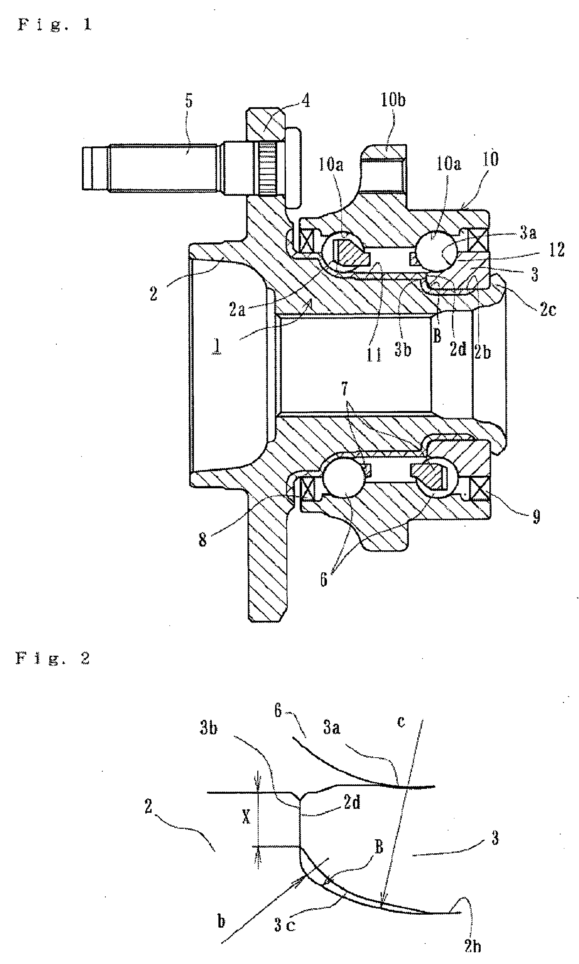

Fig. 1 shows a first embodiment of a bearing apparatus for a wheel of vehicle of the present invention. In the description below, a term "outboard side" of the apparatus denotes a side which is positioned outside of the vehicle body and a term "inboard side" of the apparatus denotes a side which is positioned inside of the body when the bearing apparatus is mounted on the vehicle body.

The illustrated bearing apparatus is that used for a driving wheel of vehicle of the third generation type and comprises an inner member 1, an outer member 10 and double row rolling elements (balls) 6, 6 contained freely rollably between the inner and outer members 1, 10. The inner member 1 comprises a hub wheel 2 and an inner ring 3 press-fitted on the hub wheel 2 via a predetermined interface.

The hub wheel 2 is integrally formed with a wheel mounting flange 4 for mounting a wheel (not shown) on its outer peripheral surface at the end of outboard side. Hub bolts 5 for securing the wheel on the flange 4 are equidistantly arranged along the periphery of the flange 4. The hub wheel 2 is also formed on its outer circumferential surface with one inner raceway surface (i.e. inner raceway surface of the outboard side) 2a and has a cylindrical portion 2b axially extending from the inner raceway surface 2a through a shoulder 2d. The inner ring 3 is fitted on the cylindrical portion 2b with its one end being abutted to the shoulder 2d of the hub wheel 2. The inner ring 3 is also formed on its outer circumferential surface with the other inner raceway surface 3b opposite to the other outer raceway surface 10a of the double row outer raceway surfaces 10a, 10a. The inner ring 3 is secured in an axial direction relative to the hub wheel 2 by a caulked portion 2c formed by radially outwardly deforming the end of the cylindrical portion 2b of the hub wheel 2. This makes it possible to provide a self-retaining structure which can keep the proper pre-load of bearing for a long term.

The outer member 10 is integrally formed on its outer circumferential surface with a body mounting flange 10b and is also formed on its inner circumferential surface with double row outer raceway surfaces 10a, 10a. Double row rolling elements 6, 6 are freely rollably held between the outer and inner raceway surfaces 10a, 10a; 2a, 3a by a cage 7. Seals 8, 9 are arranged at the ends of the outer member 10 to prevent leak of lubricating grease contained within bearing as well as ingress of rain water or dusts from outside.

The outer member is made of medium carbon steel ( carbon steel for machine structural use of SC family of JIS) including carbon of 0.40 - 0.80% by weight such as S53C and its double row outer raceway surfaces 10a, 10a are hardened by high frequency induction quenching to have a surface hardness of 58 - 64 HRC. The inner ring 3 is made of high carbon chrome bearing steel such as SUJ2 and is hardened to its core by dipping quenching to have a surface hardness of 58 - 64 HRC.

Similarly to the outer member 10, the hub wheel 2 is made of medium carbon steel including carbon of 0.40 - 0.80% by weight such as S53C and formed with hardened layer 11 (shown by cross-hatching) having surface hardness of 58 ~ 64 HRC by high frequency induction hardening at the inner raceway surface 2a of the outboard side, a seal land portion with which the seal 8 contacts, and the axially extending cylindrical portion 2b. The caulked portion 2c is remained as a non-quenched portion having a surface hardness of 25 HRC or less after its forging. This enables to improve the strength of the hub wheel and to the durability of the bearing since the fretting wear at the fitted surface of the inner ring. In addition, it is possible to improve the workability of the caulking portion and to prevent generation of cracks due to plastic deformation of that portion.

As shown in an enlarged view of Fig. 2, a corner "B" between the shoulder 2d of the hub wheel 2 and the cylindrical portion 2b is defined by a compound curve comprising a plurality of radii of curvatures "b", "c". According to the present invention, the compound curve forming the corner "B" is formed by a simultaneous grinding of the inner raceway surface 2a of the hub wheel 2 and the shoulder 2d after high frequency induction hardening of the corner. This makes it possible to carry out machining of the corner "B" of high accuracy without influence of thermal deformation due to heat treatment and to limit a joint gap (amount of pre-load) within the bearing to a desirable range.

In the plurality of radii of curvature forming the compound curve, one radius of curvature "b" is determined such that it is smaller than the maximum radius of curvature "a" when the corner "B" is formed by a single radius of curvature, and the other radius of curvature "c" is determined such that it is larger than the radius of curvature "a" (b<a<c). Thus it is possible to provide the bearing apparatus which can increase the rigidity of the inner ring by assuring a sufficient contacting area between the shoulder of the hub wheel and the end of the inner ring within a limited space and to improve the durability of the hub wheel by suppressing stress generated in the corner. In addition, It is possible to prevent the interference between the corner and the chamfered portion of the inner ring and to reduce the manufacturing cost without suppressing the dimensional variation so far.

Table 1 shows results obtained by analyzing stresses generated in the corner "B". In this analysis, following values were used in Examples 1 and 2; the maximum radius of curvature "a" = 3.5 mm, one of the compound radii of curvatures "b" = 2.5 mm, the other of the compound radii of curvatures "c" = 8.2 mm (Example 1), and "b" = 2.0 mm, "c" = 7.6 mm (Example 2). Two kinds of load conditions were used. The side surface of the body mounting flange 10b of the outer member 10 was used as a secured surface, and the side surface of the wheel mounting flange 4 of the hub wheel 2 was used as a load supporting surface. As can be clearly appreciated, it is possible to reduce 17 ~ 22 % of stress generated at the corner "B" when the corner is defined by the compound curvature as compared with a stress generated when the corner is defined by the single curvature.

**Table 1**

| Load condition | Comparative example | Example 1 | Example 2 |
|---|---|---|---|
| 1 | 2038 (1) | 1595 (0.78) | 1616 (0.83) |
| 2 | 2233 (1) | 1747 (0.78) | 1770 (0.83) |

| | | | |
|---|---|---|---|
| Note: Unit: MPa, | | | |

Value in each bracket shows a value of ratio relative to a value 1 of the Comparative example.

Although the illustrated bearing apparatus is the so-called self-retaining type in which the inner ring 3 is caulked by the cylindrical portion 2b of the hub wheel 2, the present invention is not limited thereto and can be applied to that in which the inner ring is simply press-fitted on the cylindrical portion of the hub wheel. In addition, although the illustrated bearing apparatus uses the double row angular ball bearing, it is possible to use other bearing e.g. double row tapered roller bearing using tapered rollers as the rolling elements.

### Second embodiment

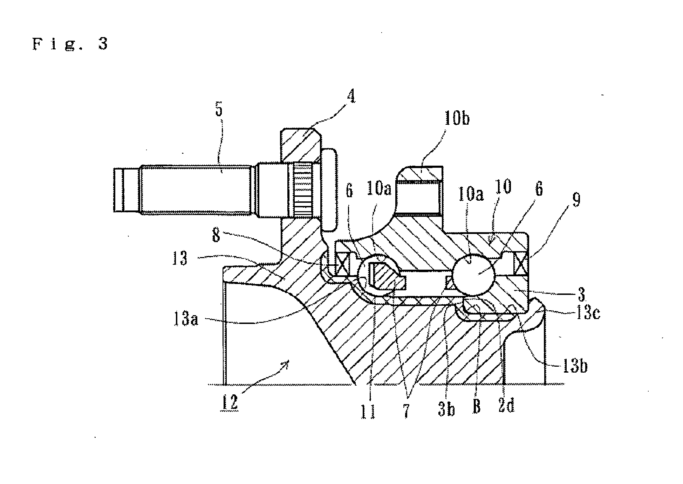

Fig. 3 is a longitudinal section view showing a second embodiment of the bearing apparatus for a wheel of the present invention which is applied to that for a driven wheel of vehicle. Same reference numerals are used for designating same parts having same functions used in the first embodiment.

The illustrated bearing apparatus is that used for a driven wheel of vehicle of the third generation type and comprises an inner member 12, an outer member 10 and double row rolling elements (balls) 6, 6 contained freely rollably between the inner and outer members 12, 10. The inner member 12 comprises a hub wheel 13 and an inner ring 3 press-fitted on the hub wheel 13 via a predetermined interface.

The hub wheel 13 is integrally formed with a wheel mounting flange 4 for mounting a wheel (not shown) on its outer peripheral surface at the end of outboard side. The hub wheel 13 is also formed on its outer circumferential surface with one inner raceway surface 13a and has a cylindrical portion 13b axially extending from the inner raceway surface 13a. The inner ring 3 is secured in an axial direction relative to the hub wheel 13 by a caulked portion 13c formed by radially outwardly deforming the end of the cylindrical portion 13b of the hub wheel 13.

The hub wheel 2 is made of medium carbon steel including carbon of 0.40 - 0.80% by weight such as S53C and formed with hardened layer 11 (shown by cross-hatching) having surface hardness of 58 - 64 HRC by high frequency induction hardening at the inner raceway surface 2a of the outboard side, a seal land portion with which the seal 8 contacts, and the axially extending cylindrical portion 2b. The caulked portion 2c is remained as a non-quenched portion having a surface hardness of 25 HRC or less after its forging.

Similarly to the previously described first embodiment, a corner "B" between the shoulder 2d of the hub wheel 13 and the cylindrical portion 13b is defined by a compound curve. Thus it is possible to provide the bearing apparatus which can increase the rigidity of the inner ring by assuring a sufficient contacting area between the shoulder of the hub wheel and the end of the inner ring within a limited space and to improve the durability of the hub wheel by suppressing stress generated in the corner.

### Applicability in industry

The bearing apparatus for a wheel of vehicle can be applied to that of the third generation type in which the inner ring is press-fitted on the cylindrical portion of the hub wheel and firmly secured therein by caulking the end of the cylindrical portion.

## Claims

1. A bearing apparatus for a wheel of vehicle comprising:
an outer member (10) having a body mounting flange (10b) formed integrally therewith and double row outer raceway surfaces (10a, 10a) formed on the inner circumferential surface thereof;
an inner member (1, 12) including a hub wheel (2, 13) having a wheel mounting flange (4) formed integrally therewith at one end thereof, one inner raceway surface (2a) formed on the outer circumferential surface thereof oppositely to one of the double row outer raceway surfaces (10a, 10a), and a cylindrical portion (2b, 13b) axially extending from the inner raceway surface (2a) through a shoulder (2d), and including an inner ring (3) fitted on the cylindrical portion (2b, 13b) with its one end being abutted to the shoulder (2d) of the hub wheel (2, 13) and formed on its outer circumferential surface with the other inner raceway surface (3b) opposite to the other outer raceway surface (10a) of the double row outer raceway surfaces (10a, 10a); double row rolling elements (6, 6)
contained freely rollably between the inner and outer raceway surfaces (2a, 3a; 10a, 10a) respectively of the inner and outer members (1, 12; 10) via a cage (7) and a
corner "B" between the shoulder (2d) of the hub wheel (2, 13) and the cylindrical portion (2b, 13b) is defined by a compound curve comprising a plurality of radii of curvatures; **characterized in that** outer diameters of the corner "B" defined by the compound curve are at least as large as the outer diameter of the cylindrical portion (2b, 13b).

2. A bearing apparatus for a wheel of vehicle of claim 1 wherein the compound curve comprises two radii of curvatures "b" and "c", one radius of curvature "b" being smaller than a radius of curvature "a" which is a maximum radius of curvature for forming the corner "B" by a single curve, the other radius of curvature "c" being larger than said radius of curvature "a", and there being a relation between them as "b<a<c".

3. A bearing apparatus for a wheel of vehicle of claim 1 or 2 wherein the compound curve forming the corner "B" is formed by a simultaneous grinding of the inner raceway surface (2a, 13a) of the hub wheel (2, 13) and the shoulder (2d) after high frequency induction hardening of the corner "B".

4. A bearing apparatus for a wheel of vehicle of any one of claims 1 ∼ 3 wherein the inner ring (3) is secured in an axial direction relative to the hub wheel (2, 13) by a caulked portion (2c, 13c) formed by radially outwardly deforming the end of the cylindrical portion (2b, 13b) of the hub wheel (2, 13).

5. A bearing apparatus for a wheel of vehicle of claim 4 wherein the hub wheel (2, 13) is formed by medium carbon steel including carbon of 0.40 - 0.80% by weight, the hub wheel (2, 13) is hardened by high frequency induction hardening over a region from a base of the wheel mounting flange (4) to the cylindrical portion (2b, 13b) as having its surface hardness of 58 - 64 HRC, and the caulked portion (2c, 13c) is remained as a non-hardened portion having its surface hardness of 25 HRC or less after forging.

## Patentansprüche

1. Lageranordnung für ein Fahrzeugrad, umfassend:
ein äußeres Element (10) mit einem Körperbefestigungsflansch (10b), der einstückig damit ausgebildet ist, und zweireihigen äußeren Laufbahnflächen (10a, 10a), die auf der inneren Umfangsfläche davon ausgebildet sind;
ein inneres Element (1, 12), das eine Radnabe (2, 13) mit einem Radbefestigungsflansch (4), der am Ende davon einstückig damit ausgebildet ist, eine innere Laufbahnfläche (2a), die auf der äußeren Umfangsfläche davon gegenüber einer der zweireihigen äußeren Laufbahnflächen (10a, 10a) ausgebildet ist, und einen zylindrischen Abschnitt (2b, 13b) umfasst, der sich axial von der inneren Laufbahnfläche (2a) durch eine Schulter (2d) erstreckt, und einen inneren Ring (3) umfasst, der auf dem zylindrischen Abschnitt (2b, 13b) angebracht ist, wobei sein eines Ende an die Schulter (2d) der Radnabe (2, 13) stößt und auf seiner äußeren Umfangsfläche mit der anderen inneren Laufbahnfläche (3b) gegenüber der anderen äußeren Laufbahnfläche (10a) der zweireihigen äußeren Laufbahnflächen (10a, 10a) ausgebildet ist;
zweireihige Wälzelemente (6, 6), die zwischen den inneren und äußeren Laufbahnflächen (2a, 3a; 10a, 10a) der inneren beziehungsweise äußeren Elemente (1, 12; 10) über einen Käfig (7) frei wälzbar enthalten sind, und eine Ecke "B" zwischen der Schulter (2d) der Radnabe (2, 13) und dem zylindrischen Abschnitt (2b, 13b), die durch eine zusammengesetzte Kurve definiert ist, die eine Mehrzahl von Krümmungsradien umfasst, **dadurch gekennzeichnet, dass** Außendurchmesser der Ecke "B", die durch die zusammengesetzte Kurve definiert ist, mindestens so groß wie der Außendurchmesser des zylindrischen Abschnitts (2b, 13b) sind.

2. Lageranordnung für ein Fahrzeugrad nach Anspruch 1, wobei die zusammengesetzte Kurve zwei Krümmungsradien "b" und "c" umfasst, wobei ein Krümmungsradius "b" kleiner als ein Krümmungsradius "a" ist, welcher ein maximaler Krümmungsradius zum Bilden der Ecke "B" durch eine einzige Kurve ist, und der andere Krümmungsradius "c" größer als der Krümmungsradius "a" ist, und zwischen ihnen eine Beziehung wie "b < a < c" besteht.

3. Lageranordnung für ein Fahrzeugrad nach Anspruch 1 oder 2, wobei die zusammengesetzte Kurve, welche die Ecke "B" bildet, durch ein gleichzeitiges Schleifen der inneren Laufbahnfläche (2a, 13a) der Radnabe (2, 13) und der Schulter (2d) nach Hochfrequenz-Induktionshärtung der Ecke "B" gebildet ist.

4. Lageranordnung für ein Fahrzeugrad nach einem der Ansprüche 1 bis 3, wobei der innere Ring (3) in einer axialen Richtung in Bezug auf die Radnabe (2, 13) durch einen verstemmten Abschnitt (2c, 13c) befestigt ist, der durch radiale Verformung nach außen des Endes des zylindrischen Abschnitts (2b, 13b) der Radnabe (2, 13) gebildet ist.

5. Lageranordnung für ein Fahrzeugrad nach Anspruch 4, wobei die Radnabe (2, 13) durch mittleren Kohlenstoffstahl gebildet ist, der 0,40 ∼ 0,80 Gew.-% Kohlenstoff enthält, die Radnabe (2, 13) durch Hochfrequenz-Induktionshärtung über eine Region von einer Basis des Radbefestigungsflansches (4) bis zum zylindrischen Abschnitt (2b, 13b) so gehärtet ist, dass es eine Oberflächenhärte von 58 ∼ 64 HRC aufweist, und der verstemmte Abschnitt (2c, 13c) nach dem Schmieden als ungehärteter Abschnitt mit einer Oberflächenhärte von 25 HRC oder weniger belassen ist.

## Revendications

1. Agencement de palier pour une roue de véhicule, comprenant:
un organe externe (10) faisant corps avec un flasque (10b) de montage sur un châssis, et un double rang de chemins de roulement externes (10a, 10a) sur sa surface périphérique interne;
un organe interne (1, 12) incluant un moyeu de roue (2, 13) possédant un flasque (4) de montage d'une roue, formé d'une pièce avec lui à une extrémité, un chemin de roulement interne (2a) sur sa surface périphérique externe, à l'opposé de l'un des deux rangs de chemins de roulement externes (10a, 10a), et une portion cylindrique (2b, 13b) s'étendant axialement à partir du chemin de roulement interne (2a) en passant par un épaulement (2d), et comprenant une bague interne (3) ajustée sur la portion cylindrique (2b, 13b), avec sa première extrémité en aboutement contre l'épaulement (2d) du moyeu de roue (2, 13), et pourvue à sa périphérie externe de l'autre chemin de roulement interne (3b) opposé à l'autre chemin de roulement externe (10a) des chemins de roulement externes (10a, 10a) du double rang ; des organes de roulement (6, 6) en deux rangs, maintenus à rotation libre entre les chemins de roulement externes et internes (2a, 3a ; 10a, 10a), respectivement des organes interne et externe (1, 12 ; 10) par l'intermédiaire d'une cage (7), et
une angulaire "B" entre l'épaulement (2d) du moyeu de roue (2, 13) et la portion cylindrique (2b, 13b) est défini par une courbe composite comprenant plusieurs rayons de courbure ; **caractérisé en ce que** les diamètres externes de l'angulaire "B" défini par la courbe composite sont au moins aussi grands que le diamètre externe de la portion cylindrique (2b, 13b).

2. Agencement de palier pour une roue de véhicule selon la revendication 1, dans lequel la courbe composite comprend deux rayons de courbure "b" et "c", un rayon de courbure "b" étant plus petit qu'un rayon de courbure "a" qui est un rayon de courbure maximum pour former l'angulaire "B" à l'aide d'une seule courbe, l'autre rayon de courbure "c" étant plus grand que le rayon de courbure "a", et une relation existant entre eux, telle que "b<a<c".

3. Agencement de palier pour une roue de véhicule selon la revendication 1 ou 2, dans lequel la courbe composite formant l'angulaire "B" est formée en meulant simultanément le chemin de roulement interne (2a, 13a) du moyeu de roue (2, 13), et l'épaulement (2d), après trempe par induction à haute fréquence de l'angulaire "B".

4. Agencement de palier pour une roue de véhicule selon l'une quelconque des revendications 1 - 3, dans lequel la bague interne (3) est fixée dans une direction axiale par rapport au moyen de roue (2, 13), par une portion matée (2c, 13c) formée en déformant radialement vers l'extérieur l'extrémité de la portion cylindrique (2b, 13b) du moyen de roue (2, 13).

5. Agencement de palier pour une roue de véhicule selon la revendication 4, dans lequel le moyeu de roue (2, 13) est formé par un acier demi-doux contenant 0,40 - 0,80% en poids de carbone, le moyeu de roue (2, 13) est trempé par trempe par induction à haute fréquence dans une région allant d'une base du flasque (4) de montage d'une roue à la portion cylindrique (2b, 13b) jusqu'à une dureté superficielle de 58 - 64 HRC, et la portion matée (2c, 13c) est conservée comme une portion non trempée, à une dureté superficielle de 25 HRC ou moins après forgeage.
